(19) Europäisches Patentamt
European Patent Office
Office européen des brevets

(11) Veröffentlichungsnummer : **0 132 514**
**B1**

(12) **EUROPÄISCHE PATENTSCHRIFT**

(45) Veröffentlichungstag der Patentschrift : **08.07.87**

(51) Int. Cl.⁴ : **C 08 G 18/80**, C 08 G 18/79, C 08 G 18/73, C 09 D 3/72

(21) Anmeldenummer : **84104673.3**

(22) Anmeldetag : **26.04.84**

(54) **Feuchtigkeitshärtende Lacke auf Isocyanatharz-Basis.**

(30) Priorität : **24.06.83 DE 3322723**

(43) Veröffentlichungstag der Anmeldung : **13.02.85 Patentblatt 85/07**

(45) Bekanntmachung des Hinweises auf die Patenterteilung : **08.07.87 Patentblatt 87/28**

(84) Benannte Vertragsstaaten : **AT BE CH DE FR GB IT LI NL**

(56) Entgegenhaltungen : **FR-A- 2 022 204**
**US-A- 3 631 198**

(73) Patentinhaber : **HÜLS AKTIENGESELLSCHAFT**
**Patentabteilung / PB 15 - Postfach 13 20**
**D-4370 Marl 1 (DE)**

(72) Erfinder : **Disteldorf, Josef, Dr.**
**Am Sengenhoff 2a**
**D-4690 Herne 1 (DE)**
Erfinder : **Flakus, Werner, Dr.**
**Dürerstrasse 23**
**D-4350 Recklinghausen (DE)**

**EP 0 132 514 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft feuchtigkeitshärtende Lacke auf der Basis von Derivaten aliphatischer Diisocyanatgemische folgender Zusammensetzung und Formel :

88 bis 99 Gew.- % 2-Methyl-1,5-diisocyanatopentan (MPDI)
12 bis 1 Gew.- % 2-Ethyl-1,4-diisocyanatobutan (EBDI)

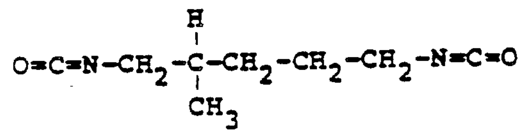

(MPDI) und

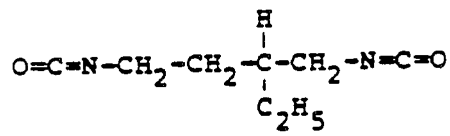

(EBDI)

Die Harz komponente der Lacke wird durch Trimerisierung des MPDI/EBDI-Gemisches zu dem entsprechenden Isocyanato-isocyanurat oder durch Umsetzung des MPDI/EBDI-Gemisches mit Trimethylolpropan in NCO : OH-Äquivalenten wie 2 : 1 hergestellt.

Durch Einwirkung von Luftfeuchtigkeit gelangen diese Harze chemisch zur Aushärtung und liefern Filme und Beschichtungen überragender Qualität.

Das Isocyanatgemisch entsteht durch Phosgenierung des entsprechenden Diamingemisches, wobei letzteres durch Hydrierung des entsprechenden Dinitrilgemisches gebildet wird. Dieses Gemisch fällt z. B. als Nebenprodukt bei der Adipodinitril-Herstellung durch Umsetzung von Butadien mit HCN oder bei der Dimerisierung von Acrylnitril an.

Eine Trimerisierung oder die Präpolymerbildung erfolgt in bekannter Weise.

Auf der Basis aromatischer Polyisocyanate sind feuchtigkeitshärtende Harze verschiedenartig herstellbar. Der Nachteil ist jedoch ihre Vergilbungstendenz z. B. im Tageslicht.

Für anspruchsvollere Anwendungen ist es daher erforderlich, cyclische Polyisocyanate, wie z. B. Isophorondiisocyanat oder Methylen-bis-(4-cyclohexylisocyanat) zu verwenden. Doch bilden das Isocyanurat oder das Propantriolpräpolymere dieser cyclischen Diisocyanate nach Feuchtigkeitshärtung lediglich harte spröde Filme.

Auf der Basis cyclischer Polyisocyanate und z. B. höhermolekularer Polyole können NCO-terminierte Addukte hergestellt werden, die nach Feuchtigkeitshärtung harte oder weiche, jeweils elastische Filme liefern. Die Harze sind aber reaktionsträge und müssen mit Zusätzen von z. B. 0,1 bis 0,2 % Zinnkatalysatoren aktiviert werden, was die Wetterstabilität der gehärteten Filme einschränkt. Die gehärteten Filme haben eine hervorragende Thermooxidationsbeständigkeit, aber keine überragende Lösungsmittelbeständigkeit.

Aliphatische Polyisocyanate stellen in Form ihres Isocyanurats oder ihrer Propantriolpräpolymeren durch ihre freibeweglichen, endständigen NCO-Gruppen hochreaktive feuchtigkeitshärtende Harze dar, die nach der Aushärtung harte, elastische, sowohl wetterstabile wie auch lösungsmittelresistente Filme ausbilden.

Problematisch ist ihre Thermooxidationsbeständigkeit und die Verträglichkeit mit anderen Produkten, wie z. B. auch mit Lösungsmitteln und Pigmenten die gerade bei cyclischen Polyisocyanatharzen in hohem Maße gegeben ist.

Es wurde nun überraschenderweise gefunden, daß Harzderivate des MPDI/EBDI-Gemisches die Qualitätsmerkmale der bisher technisch zugänglichen aliphatischen Isocyanatharze maßgebend übertreffen.

Gegenstand der Erfindung sind daher feuchtigkeitshärtende Lacke auf Isocyanatharz-Basis, dadurch gekennzeichnet, daß man als Harz das Isocyanurat oder das Trimethylolpropanpräpolymere des Diisocyanatgemisches folgender Zusammensetzung

88 bis 99 Gew.- % 2-Methyl-1,5-diisocyanato-pentan und
12 bis 1 Gew.- % 2-Ethyl-1,4-diisocyanato-butan

einsetzt, wobei das Trimethylolpropanpräpolymere im NCO : OH-Äquivalentverhältnis von 2 : 1 hergestellt wird.

Die erfindungsgemäßen feuchtigkeitshärtenden Lacke zeigen folgende Prädikate :

1. Thermooxidationsbeständigkeit
2. Lagerstabilität pigmentierter Systeme

3. Verträglichkeit mit Lösungsmitteln, Pigmenten, Reaktanten oder Hilfsmitteln
4. Lösungsmittelresistenz

Die Thermooxidationsbeständigkeit der erfindungsgemäß eingesetzten Harze ist, wie in Tabelle 1 dargelegt, untypisch für aliphatische Isocyanatharze und vergleichbar mit dem Leistungsbild cyclischer Isocyanatharze.

Tabelle 1

Thermooxidationstest mit feuchtigkeitsgehärteten Filmen der Basis aliphatischer Isocyanurate.

Bedingungen : 10 min, 240 °C
Bewertung : Farbzahl Gardner 1 bis 10

| Ausgangsharze<br>Isocyanurate der Basis | Farbzahl Gardner<br>vor dem Test | <br>nach dem Test |
|---|---|---|
| 1,6-Diisocyanato-hexan (HDI) | 1 | 7 - 8 |
| 2,2,4/2,4,4-Trimethyl-1,6-diisocyanato-hexan (TMDI) | 1 | 4 |
| 5-Methyl-1,9-diisocyanato-nonan (MNMDI) | 1 | 10 |
| 2-Methyl-1,5-diisocyanato-pentan (MPDI)<br>2-Ethyl-1,4-diisocyanato-butan (EBDI) | 1 | 2 |
| Isophorondiisocyanat (IPDI) | 1 | 1 - 2 |

Die Lagerstabilität, besonders weißpigmentierter Harze, die eine hohe Pigmentvolumenkonzentration erfordern, ist im Hinblick auf die hohe Reaktivität der erfindungsgemäß eingesetzten Harze außerordentlich (Tabelle 2).

Die Ergebnisse des verschärften Lagerungstestes bei 60 °C erlauben es, empirisch auf eine mehr als 10 fache Haltbarkeit bei 25 °C zu schließen.

Tabelle 2

a) Lagerstabilität feuchtigkeitshärtender Harze nach Pigmentierung mit $TiO_2$ (Kronos C1 310) PVK 15
b) Glanzwerte der gehärteten Filme Basisharze Trimethylopropan-Präpolymere (TMP) nachstehender Isocyanate, umgesetzt in OH : NCO-Äquivalenten wie 1 : 2

| Isocyanatkomponente | a) Lagerstabilität 60 °C | b) Glanzwerte Gardner<br>20 °C | <br>60 °C | <br>85 °C |
|---|---|---|---|---|
| HDI-Präpolymer | 3- 4 Tage | 40 | 71 | 78 |
| TMDI-Präpolymer | > 30 Tage | 82 | 88 | 97 |
| MNMDI-Präpolymer | 20-25 Tage | 76 | 91 | 96 |
| (MPDI+EBDI)-Präpolymer | > 30 Tage | 80 | 85 | 95 |

Die sehr limitierte Lagerfähigkeit des HDI-Präpolymeren wie auch der geringe Glanzwert bei 20 °C Gardner weisen auf eine deutliche Unverträglichkeit dieses Systems mit Pigmenten, Reaktionsprodukten und Lösungsmitteln hin. Diese Unverträglichkeit von HDI-Präpolymeren oder Additiven dokumentiert sich in hohem Maße, wenn solche Präpolymere durch partielle Oxyester-Zusätze modifiziert werden sollen.

So z. B. ist es erforderlich, nicht nur harte Substrate, wie Metall, Beton und Parkett, zu coaten, sondern auch weichere Substrate, wie PVC-Fußbodenbeläge und dergleichen mehr. Man kann sehr vorteilhaft weichere Harzeinstellungen vornehmen, wenn man die erfindungsgemäßen Harzsysteme mit geringen Oxyester-Zusätzen chemisch umsetzt und erst dann die Feuchtigkeitshärtung auf der Beschichtung vornimmt. Überraschenderweise lassen die erfindungsgemäß eingesetzten Harze eine derartige Modifizierung zu, während Standardvertreter aliphatischer Isocyanate wie HDI-Derivate nach wenigen Stunden Raumtemperaturlagerung gelieren.

Tabelle 3

Oxyester-Modifizierung von Isocyanuraten oder Präpolymeren aliphatischer Isocyanate zur Beschichtung von PVC. Film- und Foliendaten sowie Lagerstabilität. Basisharz : Isocyanurate und Trimethylolpropanpräpolymere. Zur Modifizierung verwendeter Oxyester Polycaprolacton 210 (PCP).

(Siehe Tabelle 3 Seite 5 ff.)

Tabelle 3

| | Harzkomponente | Filmdaten | | | Foliendaten | | Lösungsmittelresistenz | Lagerfähigk. 25 °C (Tage) |
|---|---|---|---|---|---|---|---|---|
| | | Pendelhärte König /sek/ | Erichsentiefung /mm/ | Taber Abrieb mg H 22 Rolle 100 Cyclen 500 g Bel. | Reißfestigk. N/mm² | Dehnung % | | |
| 1. | HDI-TMP (Vergleich) | 177 | 8,5 | 23,8 | 78,7 | 8 | resistent gegenüber EGA, Xylol, MEK, Aceton | ∞ |
| | modifiziert mit PCP 210 NCO:OH = 11:1 | 127 | > 10 | 31,3 | 45,7 | 10 | | < 2 |
| 2. | (MPDI+EBDI)-TMP | 187 | 9,5 | 35,1 | 78,2 | 7 | | ∞ |
| | modifiziert mit PCP 210 NCO:OH = 9:1 | 130 | > 10 | 32,2 | 48,4 | 9 | | > 100 |

Tabelle 3 (Fortsetzung)

| | Harzkomponente | Filmdaten | | | Foliendaten | | Lösungsmittelresistenz | Lagerfähigk. 25 °C (Tage) |
|---|---|---|---|---|---|---|---|---|
| | | Pendelhärte König /sek/ | Erichsentiefung /mm/ | Taber Abrieb mg H 22 Rolle 100 Cyclen 500 g Bel. | Reißfestigk. $N/mm^2$ | Dehnung % | | |
| 3. | HDI-Isocyanurat (Vergleich) | 190 | 8,0 | 33 | 53,4 | 9 | resistent gegenüber EGA, Xylol, MEK, Aceton | ∞ |
| | modifiziert mit PCP 210 NCO:OH = 10:1 | 140 | 9,6 | 28 | 35,2±1,4 | 13 | | 40 |
| 4. | (MPDI EBDI)-Isocyanurat | 184 | 10,0 | 43,1 | 57,3 | 8 | | ∞ |
| | modifiziert mit PCP 210 NCO:OH = 9:1 | 130 | 10,0 | 32,2 | 43,2 | 10 | | > 40 |

Im Hinblick auf die gute Verträglichkeit der erfindungsgemäß eingesetzten Harze ist ihre hervorragende Lösungsmittelresistenz überraschend, wenn man die Superbenzinempfindlichkeit des gut verträglichen 5-Methyl-1,4-dicyanato-nonans (MNMDI) zum Vergleich heranzieht (Tabelle 4).

Tabelle 4

Lösungsmittelresistenz feuchtigkeitsgehärteter Filme der Trimethylol-Präpolymere nachstehender Isocyanate, umgesetzt in OH : NCO-Äquivalenten = 1 : 2

(Siehe Tabelle 4 Seite 7 f.)

Tabelle 4

| Isocyanatkomponente | EGA +) | MEK +) | Aceton | Xylol | Superbenzintest 1 h, 50 °C Pendelhärte Konig (sec) | |
|---|---|---|---|---|---|---|
| | Reibtest 100 Cyclen | | | | vor dem Test | nach dem Test |
| HDI-Präpolymer | keinerlei Einwirkung | | | | 167 | 158 |
| TMDI-Präpolymer | keinerlei Einwirkung | | | | 172 | 169 |
| HMMDI-Präpolymer | keinerlei Einwirkung | | | | 178 | 52 *) |
| (MPDI+EBDI)-Präpolymer | keinerlei Einwirkung | | | | 177 | 167 |

*) Lösungsmittelaufnahme und Erweichung des Films
+) EGA = Ethylenglykolacetat
+) MEK = Methylethylketon

Die erfindungsgemäß eingesetzten Harze liefern unmittelbar angewandt reaktive, kalt härtende, harte aber elastische Beschichtungen. Die Härtung kann bei Bedarf auch in der Wärme vollzogen werden.

Beispiel 1

134 g Trimethylolpropan (1 Mol) sowie
504 g eines Gemisches von MPDI und EBDI (3 Mol) in
343 g Ethylglykolacetat
werden in 6 h bei 80 °C zur Umsetzung gebracht.

Ausbeute 978 g Präpolymer, NCO-Gehalt : 12,79 % (theor. 12,84 %), hochviskoses, praktisch farbloses Harz

Harzzubereitung :
65 Gew.-T. Harz
35 Gew.-T. Ethylglykolacetat
0,01 Gew.-T. Dibutylzinnlaurat (DBTL)
0,2 Gew.-T. Diazabicyclooctan (DABCO®)
Nach Feuchtigkeitshärtung werden nachstehende Daten erhalten :

| Stahlblech-Daten | | | | | Folien-Daten | |
|---|---|---|---|---|---|---|
| Pendelhärte König /sec/ 1. Tag | 3. Tag | 7. Tag | Erichsentiefung /mm/ | Taber Abrieb H 22 Rolle 100 Cyclen 500 g Bel. /mg/ | Reißfestigkeit /$N/mm^2$/ | Dehnung % |
| 160 | 180 | 193 | 9,8 | 35 | 78,2 | 7 |

Lösungsmittelbeständig gegenüber MEK, EGA, Xylol, Aceton, Superbenzin (1 h, 50 °C)
Stahlblechdaten Harzbeispiel 1 jedoch pigmentiert mit $TiO_2$ (Kronos Cl 310), PVK 15.

| Pendelhärte König /sec/ 1. Tag | 3. Tag | 7. Tag | Erichsentiefung /mm/ | Glanzwerte Gardner 20 °C | 60 °C | 85 °C |
|---|---|---|---|---|---|---|
| 157 | 159 | 171 | 9,0 | 84 | 93 | 95 |

Beispiel 2

Triisocyanato-isocyanurat des Gemisches von MPDI und EBDI. Die Herstellung des Harzes ist in der DE-A-31 51 855 beschrieben.

Harzzubereitung :
65 Gew.-T. Isocyanurat (MPDI+EBDI) NCO-Gehalt : 16,2 %
35 Gew.-T. Ethylglykolacetat
0,01 Gew.-T. DBTL
0,2 Gew.-T. DABCO®
Nach Feuchtigkeitshärtung werden nachstehende Daten erhalten :

(Siehe Tabelle Seite 10 f.)

| Stahlblechdaten | | | | | Foliendaten | |
|---|---|---|---|---|---|---|
| Pendelhärte König [sec] | | | Erichsen-tiefung [mm] | Taber-Abrieb H 22 Rolle 100 Cyclen 500 g Bel. [mg] | Reiß-festigkeit [N/mm²] | Dehnung % |
| 1. Tag | 3. Tag | 7. Tag | | | | |
| 129 | 195 | 200 | 7,1 | 43,1 | 57,3 | 8 |

Lösungsmittelbeständig gegenüber EGA, Xylol, MEK, Aceton, Superbenzin.

Durch Umsetzung des monomeren Diisocyanatgemisches bestehend aus MPDI und EBDI mit linearen Oxyestern, vorzugsweise solcher von Molekulargewichten ca. 1 000 in NCO : OH-Äquivalenten wie 2 : 1 erhält man Harze, die nach Feuchtigkeitshärtung weiche, noch klebrige Filme bilden und für eine unmittelbare Verwendung nicht sonderlich geeignet sind. Doch sind diese linearen, NCO-endständigen Präpolymeren vorzüglich geeignet zur Modifizierung der Harze gemäß Beispiel 1 und 2 Verwendung zu finden, um weniger harte Filme auf flexiblen Substraten zu erhalten :

Beispiel 3

1 016,9 g Harz (hergestellt durch Umsetzung von PCP 210 mit (MPDI+EBDI) im Äquivalenzverhältnis OH : NCO = wie 1 : 2) NCO-Gehalt : 4,13 % sowie

2 616,8 g Harz gemäß Beispiel 1 werden homogen gemischt und liefern nach Feuchtigkeitshärtung nachstehende Daten :

| Stahlblechdaten | | | Foliendaten | |
|---|---|---|---|---|
| Pendelhärte König [sec] 15 min 150 °C | Erichsen-tiefung [mm] | Taber Abrieb H 22 Rolle 100 Cyclen 500 g Bel. [mg] | Reiß-festigkeit [N/mm²] | Dehnung % |
| 148 | > 12 | 32 | 48,8 | 13 |

Lösungsmittelbeständig gegenüber EGA, MEK, Aceton, Xylol.

Beispiel 4

In Analogie zu Beispiel 3 werden beide Harze abgemischt, jedoch im Gewichtsverhältnis 1 :1. Nach Feuchtigkeitshärtung werden folgende Daten erhalten :

| Stahlblechdaten | | Foliendaten | |
|---|---|---|---|
| Pendelhärte König [sec] 15 min 150 °C | Erichsen-tiefung [mm] | Reiß-festigkeit [N/mm²] | Dehnung % |
| 77 | > 12 | 19,1 | 35 |

Lösungsmittelbeständig gegenüber EGA und Xylol, lösungsmittelanfällig gegenüber MEK und Aceton.

Beispiel 5

Analoge Abmischungen gemäß Beispiel 3 und 4 des Isocyanurats (MPDI+EBDI) und des linearen Präpolymeren, (hergestellt durch Umsetzungen von PCP 210 mit MPDI EBDI-Gemischen in OH : NCO-Äquivalenten 1 : 2) geben nach Feuchtigkeitshärtung zahlenmäßig analog gleichwertige Stahlblech- und Foliendaten.

Die überragende Leistungsfähigkeit bei den erfindungsgemäß eingesetzten Addukten des MPDI/EBDI-Gemisches ergibt sich auch aus der Tatsache, daß Oxyesterpräpolymere wie etwa Beispiel 6 zwar hohe Reaktionsfähigkeit, gute Verträglichkeit und bemerkenswerte mechanische Filmdaten liefern, aber hinsichtlich der Lagerstabilität und Lösungsmittelbeständigkeit unzulänglich sind.

Beispiel 6 (Vergleich)

Präpolymer hergestellt aus
210 g Oxyester (1 Mol TMP, 2 Mol PS, 2 Mol HD 1,6) OHZ = 266,7
168 g MPDI/EBDI
378 g Ethylglycolacetat
(PS = Phthalsäure, HD = Hexandiol)
Farbloses Harz, NCO-Gehalt : 5,55 %
Nach katalytischer Aktivierung mit 0,02 % DBTL und 0,2 %
DABCO und Feuchtigkeitshärtung werden nachstehende Filmdaten und Eigenschaften ermittelt :

| Pendelhärte König [sec] | | | Erichsen-tiefung [mm] | Lösungs-mittel-resistenz | Lagerstabilität bei Raumtemp. |
|---|---|---|---|---|---|
| 1. Tag | 3. Tag | 7. Tag | | | |
| 113 | 133 | 170 | > 10,0 | Resistent gegenüber EGA, Xylol anfällig gegenüber MEK, Aceton und Superbenzin | Klarlack ca. 6 Monate Pigm. System ca. 4 Wochen |

**Patentanspruch**

Feuchtigkeitshärtende Lacke auf Isocyanatharz-Basis, dadurch gekennzeichnet, daß man als Harz das Isocyanurat oder das Trimethylolpropanpräpolymere des Diisocyanatgemisches folgender Zusammensetzung : 88 bis 99 Gew.-% 2-Methyl-1,5-diisocyanato-pentan und 12 bis 1 Gew.-% 2-Ethyl-1,4-diisocyanato-butan einsetzt, wobei das Trimethylolpropanpräpolymere im NCO :OH-Äquivalentverhältnis von 2 : 1 hergestellt wird.

**Claim**

Moisture-curing paints based on isocyanate, characterized in that the resin used is the isocyanurate or the trimethylolpropane prepolymer of the diisocyanate mixture of the following composition : 88 to 99 % by weight of 2-methyl-1,5-diisocyanato-pentane and 12 to 1 % by weight of 2-ethyl-1,4-diisocyanato-butane, the trimethylolpropane prepolymer being prepared in an NCO : OH equivalent ratio of 2 : 1.

**Revendication**

Vernis durcissant à l'humidité à base de résine d'isocyanate, caractérisé en ce que : l'on utilise, comme résine, l'isocyanurate, ou le prépolymère de triméthylolpropane du mélange de diisocyanates ayant la composition suivante : 88 à 99 % en poids de 2-méthyl-1,5-diisocyanatopentane et 12 à 1 % en poids de 2-éthyl-1,4-diisocyanato-butane, le prépolymère de triméthylolpropane étant fabriqué dans le rapport d'équivalence NCO : OH de 2 : 1.